# FASCICULE DE BREVET EUROPEEN

(11) **EP 2 839 203 B1**
(45) Date de publication et mention de la délivrance du brevet: **01.08.2018**
(21) Numéro de dépôt: 13719909.7
(22) Date de dépôt: 22.03.2013
(51) Int. Cl.: F17C 13/06, F17C 13/00

(54) **CHAPEAU DE PROTECTION POUR ROBINET DE BOUTEILLE DE FLUIDE SOUS PRESSION ET SON PROCÉDÉ DE FABRICATION**
SCHUTZKAPPE FÜR EIN DRUCKFLÜSSIGKEITSZYLINDERVENTIL UND HERSTELLUNGSVERFAHREN DAFÜR
PROTECTIVE CAP FOR A PRESSURISED FLUID CYLINDER VALVE AND PRODUCTION METHOD THEREOF

(30) Priorité: 19.04.2012 FR 1253604
(43) Date de publication de la demande: 25.02.2015
(73) Titulaire: L'Air Liquide Société Anonyme pour l'Etude et l'Exploitation des Procédés Georges Claude, 75007 Paris (FR)
(72) Inventeur: LIGONESCHE, Renaud, F-95220 Herblay (FR); TRINDADE, François, F-23300 Saint Priest La Feuille (FR); LEBEGUE, William, F-23800 Naillat (FR)
(74) Mandataire: De Cuenca, Emmanuel Jaime
(86) Numéro de dépôt international: PCT/FR2013/050621
(87) Numéro de publication internationale: WO 2013/156699

(56) Documents cités:
- WO-A1-2012/030882
- DE-U1-202009 017 665

## Description

La présente invention concerne un chapeau de protection pour robinet de bouteille de fluide sous pression et son procédé de fabrication.

L'invention concerne plus particulièrement un chapeau de protection pour robinet de bouteille de fluide sous pression comprenant un arceau définissant un volume abrité de protection, l'extrémité inférieure de l'arceau étant fixée à une base de forme générale annulaire destinée à être montée autour du col d'une bouteille de fluide sous pression.

Les bouteilles de fluide sous pression et les équipements qui les accompagnent sont soumis à des réglementations et des normes de sécurité.

Les chapeaux de protection des robinets de bouteilles de gaz sont par exemple soumis à la norme suivante: le test normatif ISO 11117 et particulièrement la résistance aux chocs (à 20°C et -20°C). Ces chapeaux doivent également satisfaire à des exigences de tenue au feu et de cycles de vie prolongés.

Pour satisfaire à ces contraintes certains chapeaux de protection sont constitués de métal. Le document DE10146261 décrit ainsi un chapeau réalisé en métal moulé et dont les différentes parties sont soudées. Ce type d'architecture et sa fabrication conduit cependant à un chapeau relativement lourd, onéreux à fabriquer si les normes de tenue mécaniques doivent être respectées.

Le document GB1529293 décrit quant à lui un chapeau de protection constitué d'une une seule pièce emboutie. Ce chapeau présente cependant une géométrie qui n'est pas optimale pour la protection de tous les robinets. De plus, ce mode réalisation conduit à chapeau dont la tenue mécanique aux chutes n'est pas satisfaisante. Un autre exemple de chapeau est montré dans le document DE20 2009 017 665U1. Selon d'autres solutions connues le chapeau est réalisé en plastique, éventuellement avec un insert métallique (cf. EP1041339).

D'une manière générale, pour assurer toutes les fonctions requises et satisfaire aux contraintes techniques, les conceptions de chapeau connus nécessitent une quantité de matière relativement importante.

Un but de la présente invention est de pallier tout ou partie des inconvénients de l'art antérieur relevés ci-dessus.

Un but de l'invention peut notamment être de proposer un chapeau et son procédé de fabrication qui permettent de répondre aux contraintes de sécurité sans pénaliser notamment la masse du chapeau, son coût, la possibilité de donner au chapeau une forme qui s'adapte à différentes géométries de robinet tout en présentant un aspect attractif.

A cette fin, le chapeau selon l'invention, par ailleurs conforme à la définition générique qu'en donne le préambule ci-dessus, est essentiellement caractérisé en ce que l'arceau comprend une feuille métallique mis en forme par emboutissage.

Par ailleurs, des modes de réalisation de l'invention peuvent comporter l'une ou plusieurs des caractéristiques suivantes :
- l'extrémité supérieure de l'arceau comporte une protubérance sur laquelle est fixée un pommeau de préhension du chapeau,
- le pommeau est fixé par soudage et/ou sertissage sur l'extrémité supérieure de l'arceau,
- le pommeau a la forme générale d'un capuchon creux qui, en position montée sur l'arceau, accueille en son sein au moins une partie de la protubérance,
- la protubérance est formée par emboutissage de l'arceau,
- le pommeau est fixé par soudage sur l'extrémité libre de la protubérance,
- le pommeau est creux, l'extrémité libre de la protubérance reposant contre le fond du pommeau tandis qu'une extrémité inférieure du pommeau repose sur l'extrémité supérieure de l'arceau et/ou sur une autre portion de la protubérance,
- l'extrémité supérieure libre du pommeau est convexe vers l'extérieur du chapeau,
- la base comprend une pièce métallique distincte de l'arceau et ayant la forme générale d'un anneau ouvert dont deux extrémités en vis-à-vis sont munies de passages respectifs pour un axe de serrage dudit anneau, l'extrémité inférieure de l'arceau étant fixée à la base par soudage et/ou par sertissage,
- l'extrémité inférieure de l'arceau comporte deux demi-anneaux formant un collier circulaire qui enserre la base sur une fraction de la circonférence de la base comprise entre 20 à 100% et de préférence entre 60 et 100%,
- la base est composée d'une pièce métallique mise en forme par emboutissage,
- l'arceau comporte au moins une nervure qui s'étend selon la direction de cintrage de l'arceau ladite au moins une nervure étant formée par une pliure d'emboutissage,
- la protubérance est ouverte à son extrémité supérieure,
- la protubérance a la forme générale d'un tronc de cône dont le diamètre diminue en direction de son extrémité libre,
- la protubérance a la forme générale d'un tronc de cône qui converge de façon discontinue en direction de son extrémité libre, c'est-à-dire que la protubérance définit une portion convexe et/ou concave sur sa surface extérieure,
- la base comporte une portion de montage de forme générale tubulaire destinée à être montée autour d'un col de bouteille, l'extrémité supérieure de la portion de montage étant cintrée perpendiculairement à l'axe de la portion tubulaire pour former un rebord qui est fixé à l'extrémité inférieure de l'arceau,
- l'arceau est au moins partiellement convexe vers l'extérieur du volume de protection,
- les passages pour un axe de serrage dudit anneau formés aux extrémités de l'anneau anneau ouvert formé par la base sont situés sur des plaquettes perforées respectives solidaires de la base ou rapportées sur la base,
- le pommeau est composé d'une pièce métallique mis en forme par emboutissage,
- au moins l'un parmi : l'arceau, la base, le pommeau est constitué de l'un au moins des matériaux suivants : un matériau métallique, un acier ayant de préférence des caractéristiques supérieures ou égales à celles d'un acier de construction, par exemple un acier de type S355MC selon la norme NF EN 10149.2 avec une limite élastique de Re = 355 (MPa) et une résistance à la rupture de Rm =430 à 550 (MPa),
- au moins l'un parmi : l'arceau, la base, le pommeau a une épaisseur comprise entre 0,5 et 10mm et de préférence entre 1 et 4mm ou tout autre épaisseur selon appropriée selon le poids de charge, les sollicitations, les formes de l'embouti,
- la circonférence de la base présente au moins une excroissance, ou respectivement un renfoncement, qui est reçu, respectivement qui reçoit, un renfoncement ou une excroissance complémentaire formée au niveau de l'extrémité inférieure de l'arceau.

L'invention concerne également une bouteille de fluide sous pression munie d'un robinet et d'un chapeau de protection du robinet conforme à l'une quelconque des caractéristiques ci-dessus ou ci-après.

L'invention concerne également un procédé de fabrication d'un chapeau de protection pour robinet de bouteille de fluide sous pression conforme à l'une quelconque des caractéristiques précédentes ou ci-après comprenant :
- une étape de réalisation d'un arceau par emboutissage d'une feuille métallique, et
- une étape de soudage de l'extrémité inférieure de l'arceau sur une base de forme générale annulaire.

Selon d'autres particularités possibles :
- lors de l'étape de réalisation d'un arceau par emboutissage d'une feuille métallique, une protubérance est réalisée sur l'extrémité supérieure de l'arceau, le procédé comprenant en outre une étape de soudage d'un pommeau sur ladite protubérance,
- l'étape de soudage de l'extrémité inférieure de l'arceau sur une base de forme générale annulaire est précédée d'une étape de réalisation de la base par emboutissage d'une feuille métallique,
- l'extrémité inférieure de l'arceau forme un collier circulaire, lors de l'étape de soudage de l'extrémité inférieure de l'arceau sur une base, l'extrémité inférieure de l'arceau enserre 60 à 100% de la circonférence de la base,
- préalablement à l'étape de soudage de l'extrémité inférieure de l'arceau sur une base de forme générale annulaire, la base est introduite entre les branches de l'arceau via le volume abrité, de haut en bas par référence aux extrémités supérieure et inférieure de l'arceau.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en perspective d'un exemple de réalisation possible d'un chapeau de protection selon l'invention,
- la figure 2 représente une vue de derrière du chapeau de la figure 1,
- la figure 3 représente une vue en perspective, partielle et de dessous du chapeau de la figure 1,
- la figure 4 représente une vue en coupe selon un plan vertical du chapeau de la figure 1,
- la figure 5 représente une vue en coupe selon un plan vertical du chapeau de la figure 1 monté sur une bouteille illustrant schématiquement un choc sur le sol,
- la figure 6 représente une vue schématique et partielle illustrant un exemple d'étapes de fabrication possibles du chapeau de la figure 1.

Le chapeau de protection pour robinet de bouteille de fluide sous pression illustré aux figures comprend un arceau 1 définissant un volume abrité de protection et dont l'extrémité inférieure est fixée à une base 2 de forme générale annulaire destinée à être montée autour du col d'une bouteille de fluide sous pression. On qualifiera d'extrémités « inférieure » et « supérieure » les extrémités du chapeau respectivement située au niveau de la base 2 et à l'opposé de la base 2.

Par exemple, l'arceau 1 à la forme générale d'un U inversé dont les deux extrémités inférieures des branches du U sont fixées à la base 2. Comme représenté, les deux extrémités inférieures des branches du U fixées à la base 2 ne sont pas parallèles mais convergent légèrement.

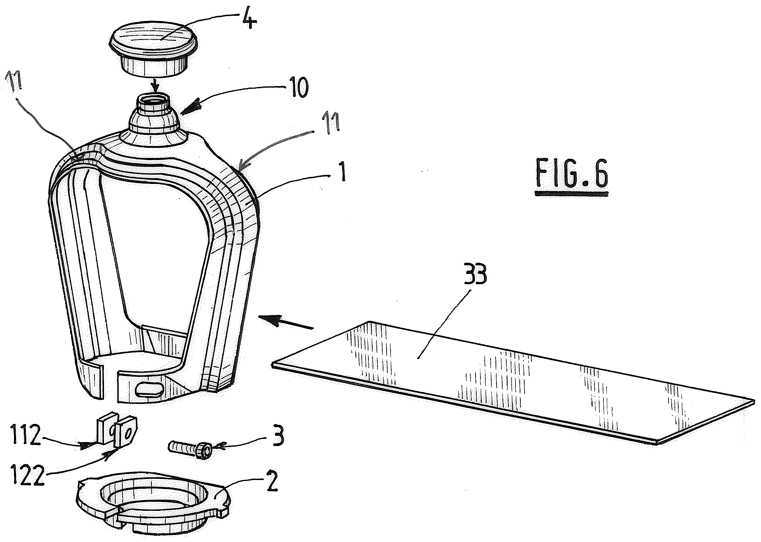

Selon une caractéristique avantageuse, l'arceau 1 est composé (et de préférence constitué) d'une feuille 33 métallique mis en forme par emboutissage (cf. figure 6).

Comme cela sera décrit plus en détail ci-après, cette caractéristique permet de conférer une bonne résistance mécanique au chapeau tout en utilisant une épaisseur de matériau relativement faible. L'arceau 1 est de préférence constitué de l'un au moins des matériaux parmi : un acier, un acier inox, un acier avec revêtement de type cataphorèse, un aluminium avec traitement de type anodisation. Tous les types de matériaux métalliques appropriés sont envisageables avec, le cas échéant, le ou les traitements adaptés par exemple pour la corrosion, pour l'aspect de finition,...). Ces matériaux confèrent au chapeau une bonne tenue au feu ainsi qu'une bonne résistance à la corrosion.

Cette structure permet également, via des nervures et/ou plis et/ou bossages, d'augmenter la tenue mécanique ou d'améliorer la répartition des efforts subis par le chapeau en cas de choc par rapport aux solutions connues.

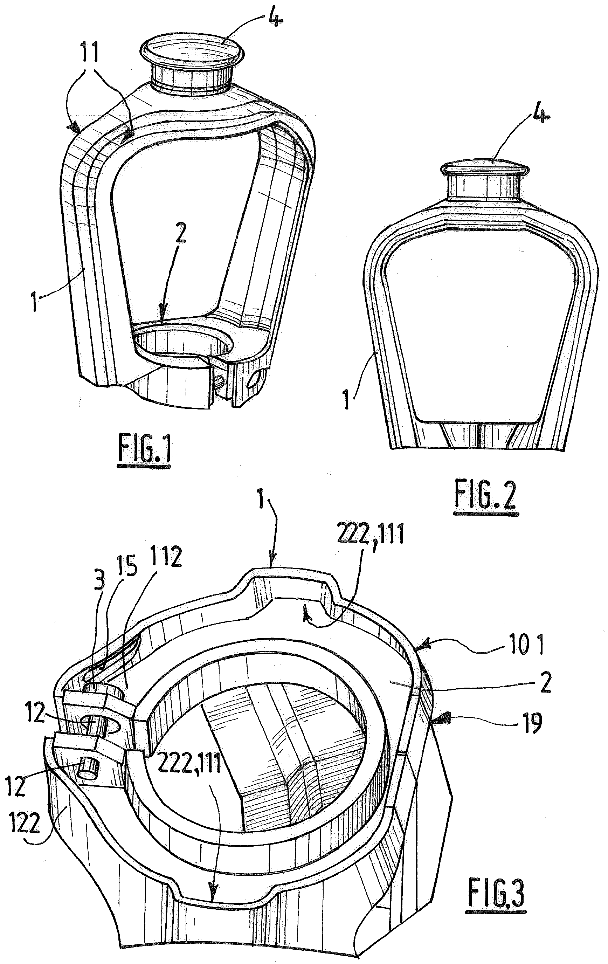

Comme visible à la figure 1, l'arceau 1 peut comporter au moins (et par exemple deux nervures 11) qui s'étend selon la direction de cintrage de l'arceau. La ou les nervure 11 peuvent être formée par une pliure d'emboutissage de la feuille métallique. Par exemple deux nervures 11 forment un épaulement qui s'étend sur l'arceau sur tout ou partie de l'arceau 1 et selon la direction du cintrage de l'arceau 1.

L'arceau 1 peut être au moins partiellement convexe vers l'extérieur du volume de protection. L'épaisseur de l'arceau 1 est par exemple comprise entre 0,5mm et 10mm et de préférence entre 1mm et 4mm. Bien entendu cette épaisseur peut être adaptée en fonction de l'application, du poids de charge, des sollicitations attendues, des formes embouties du chapeau.

La base 2 comprend une pièce métallique distincte de l'arceau 1 qui a de préférence la forme générale d'un anneau ouvert formant ainsi une bride de fixation. Les deux extrémités en vis-à-vis de l'anneau sont par exemple munies de passages respectifs 12, 22 pour un axe 3 de serrage dudit anneau. Les passages 12, 22 (le cas échéant taraudés) pour l'axe 3 de serrage (le cas échéant fileté) peuvent être des plaquettes perforées 112, 122 respectives solidaires de la base 2 ou rapportées sur la base 2.

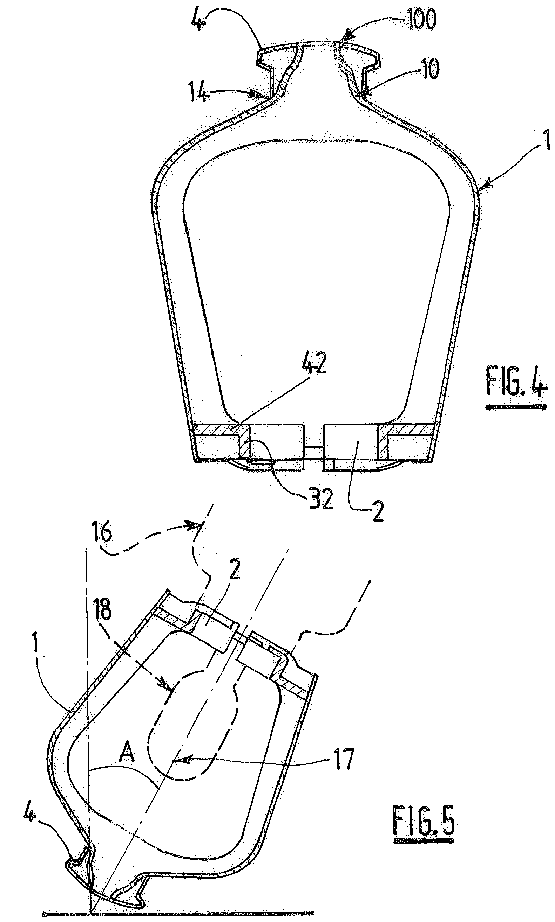

Comme visible aux figures 3 et 4, la base 2 peut comporter une portion 32 de montage de forme générale tubulaire 2 destinée à être montée autour d'un col de bouteille. L'extrémité supérieure de la portion 32 de montage peut être cintrée perpendiculairement à l'axe de la portion tubulaire vers l'extérieur de la partie tubulaire pour former un rebord 42 qui est fixé à l'extrémité inférieure de l'arceau 1.

Par exemple, l'extrémité inférieure de l'arceau 1 est fixée à la base 2 par soudage et/ou par sertissage ou toute autre technique appropriée.

Par exemple, l'extrémité inférieure de l'arceau 1 comporte deux demi-anneaux formant un collier 101 circulaire qui enserre la base 2 sur une fraction de la circonférence de la base 2 comprise entre 60 à 100%. C'est-à-dire que chaque extrémité inférieure des deux branches de l'arceau 1 est solidaire (de préférence venu de matière) avec une un demi-anneau qui est fixé sur une partie de la périphérie de la base 2. Comme visible à la figure 3, la circonférence de la base 2 peut présenter au moins une excroissance 222 (deux excroissances 222 dans l'exemple de la figure 3) qui est reçue un renfoncement 111 respectif formé au niveau de l'extrémité inférieure de l'arceau 1. Par exemple, les renfoncements 11 sont formés par une extrémité de la ou des nervures 11 de l'arceau 1.

Cette configuration assure un blocage mécanique en rotation de l'arceau 1 par rapport à la base 2 qui de plus améliore la transmission et la dissipation d'efforts au sein du chapeau en cas de choc. Ces formes participent de plus à l'indexage de l'arceau sur la base 2 lors de la phase de soudage. En variante ou en combinaison avec ce qui précède, la base 2 pourrait comporter un ou des renfoncements qui coopèrent respectivement avec des excroissances respectives formées de préférence par des nervures ou bossage de l'arceau 1.

De même, de préférence, une partie de la circonférence de la base 2 et donc une partie de l'extrémité inférieure de l'arceau 1 présente un méplat 19. Le méplat 19 est par exemple situé à l'opposé de la partie munie d'un axe 3 de serrage. Le méplat 19 est par exemple prévu pour faciliter l'accès au volume de protection. Le méplat 19 forme ainsi un rétrécissement localisé qui ménage un passe pour des raccordements fluidiques par exemple.

Comme visible à la figure 4, l'arceau 1 est par exemple soudé sur la bordure du rebord 42 formé par la base 2 (de préférence selon plusieurs points de soudure répartis sur le tour de la base 2).

Comme visible aux figures 2 et 3 notamment, la base 2 peut ne pas faire saille au-delà de l'extrémité inférieure de l'arceau 1. Ainsi, les passages 12, 22 et l'axe de serrage sont protégés par l'arceau 1. Une lumière 15 peut être prévue au travers de l'extrémité inférieure de l'arceau 1 pour accéder à l'axe 3 de serrage.

La base 2 peut également être composée d'une pièce métallique mis en forme par emboutissage. En variante, la base 2 pourrait être obtenue par moulage d'un matériau métallique. De préférence, la base est constituée du même matériau que l'arceau 1.

Du fait que les extrémités inférieures de l'arceau 1 ne sont pas parallèles (mais convergent), la base 2 peut avoir une dimension transverse supérieure à l'espace entre les extrémités terminales inférieures de l'arceau 1. De ce fait, la base 2 est introduite entre les deux branches de l'arceau 1 de haut en bas via le volume de protection de l'arceau 1 (cf. figures 4 et 6). C'est-à-dire que la base 2 peut être serrée dans l'arceau 1.

L'extrémité supérieure de l'arceau 1 comporte de préférence un pommeau 4 de manutention du chapeau (et donc de la bouteille munie du chapeau).

Selon une particularité particulièrement avantageuse possible, l'extrémité supérieure de l'arceau 1 comporte une protubérance 10 sur laquelle est fixé le pommeau 4.

De préférence le pommeau 4 est également métallique et est fixé par soudage et/ou sertissage sur l'extrémité supérieure de l'arceau 1.

Comme visible à la figure 4, la protubérance 10 peut être formée par emboutissage lors de la fabrication de l'arceau 1. Par exemple, la protubérance 10 a la forme générale d'un tronc de cône dont le diamètre diminue (pas forcément continument) en direction de son extrémité libre 100.

La protubérance 10 peut être ouverte à son extrémité supérieure 100. De plus, la protubérance 10 peut définir au moins une portion convexe et/ou concave sur sa surface extérieure.

Comme visible à la figure 4, le pommeau 4 peut avoir une forme d'un capuchon creux qui, en position montée sur l'arceau 1, accueille en son sein au moins une partie de la protubérance 10.

Par exemple, l'extrémité libre de la protubérance 10 reposant contre le fond du pommeau 4 et forme une zone de soudage entre ces deux pièces. L'extrémité inférieure 14 du pommeau 4 peut reposer (ou être emmanchée/soudée...) sur l'extrémité supérieure de l'arceau 1 et/ou sur une autre portion de la protubérance 10.

De préférence le pommeau 4 offre une prise à la saisie manuelle, par exemple un rebord sur la périphérie.

De préférence également, l'extrémité supérieure libre du pommeau 4 est convexe vers l'extérieur du chapeau. Cette configuration, en plus d'améliorer l'ergonomie de la prise manuelle, augmente la tenue au choc du chapeau comme décrit ci-dessous.

La figure 5 illustre de façon schématique et partielle un exemple d'impact du chapeau sur le sol. Le chapeau est monté sur une bouteille 16 et vient frapper le sol avec un angle A de trente degrés par rapport à l'axe 17 vertical de la bouteille et du chapeau. Cette configuration est obtenue par exemple en suspendant la bouteille à l'envers (par exemple à 1,20 mètre du sol). Selon ce test de chute (norme ISO 11117), le pommeau 4 vient frapper en premier le plan d'impact.

Sous l'effet du choc le pommeau 4, de part sa structure et son montage sur l'arceau 1, peut se déformer et absorber une première partie de l'énergie générée par le choc. De plus, simultanément ou dans un second temps, le profil de la protubérance 10 sur laquelle est montée le pommeau 4 réparti l'effort au sein de l'arceau 1 et jusqu'au niveau de la base 2. Ceci limite les déformations trop localisées pouvant entraîner une déformation affectant le robinet 18 situé dans le volume de protection.

La forme convexe du pommeau 4 assure également lors de l'impact un contact générant un glissement du chapeau suivi d'un moment de rotation de l'ensemble. Des simulations et tests indiquent que ce moment de rotation limite considérablement l'impact sur le chapeau.

On conçoit donc aisément que, tout en étant de structure simple et peu coûteuse, le chapeau selon l'invention est particulièrement efficace en terme de protection et de tenue au choc.

## Revendications

1. Chapeau de protection pour robinet de bouteille de fluide sous pression comprenant un arceau (1) définissant un volume abrité de protection, l'extrémité inférieure de l'arceau (1) étant fixée à une base (2) de forme générale annulaire destinée à être montée autour du col d'une bouteille de fluide sous pression, l'arceau (1) comprenant une feuille métallique mis en forme par emboutissage, **caractérisé en ce que** l'arceau (1) comporte au moins une nervure (11) qui s'étend selon la direction de cintrage de l'arceau (1) sur tout ou partie de la longueur de l'arceau (1), ladite au moins une nervure (11) étant formée par une pliure d'emboutissage.

2. Chapeau selon la revendication 1, **caractérisé en ce que** la au moins une nervure (11) formant un épaulement sur l'arceau (1) s'étendant sur l'arceau (1) selon la direction de cintrage.

3. Chapeau selon l'un quelconque des revendications 1 ou 2, **caractérisé en ce que** l'arceau (1) est au moins partiellement convexe vers l'extérieur du volume de protection.

4. Chapeau selon l'une quelconque des revendications 1 et 3, **caractérisé en ce que** l'extrémité supérieure de l'arceau (1) comporte une protubérance (10) sur laquelle est fixée un pommeau (4) de préhension du chapeau.

5. Chapeau selon la revendication 4, **caractérisé en ce qu'**il comprend deux nervures (11) parallèles qui s'étendent selon la direction de cintrage de l'arceau (1) de part et d'autre du pommeau (4).

6. Chapeau selon la revendication 4 ou 5, **caractérisé en ce que** le pommeau (4) est fixé par soudage et/ou sertissage sur l'extrémité supérieure de l'arceau (1) la protubérance (10) étant formée par emboutissage de l'arceau (1).

7. Chapeau selon l'une quelconque des revendications 4 à 6, **caractérisé en ce que** le pommeau (4) a la forme générale d'un capuchon creux qui, en position montée sur l'arceau (1), accueille en son sein au moins une partie de la protubérance (10).

8. Chapeau selon l'une quelconque des revendications 4 à 7, **caractérisé en ce que** le pommeau (4) est fixé par soudage sur l'extrémité (100) libre de la protubérance (10).

9. Chapeau selon l'une quelconque des revendications 1 à 8, **caractérisé en ce que** la circonférence de la base (2) présente au moins une excroissance (222), ou respectivement un renfoncement, qui est reçu(e), respectivement qui reçoit, un renfoncement (111) ou une excroissance complémentaire formée au niveau de l'extrémité inférieure de l'arceau (1)

10. Chapeau selon la revendication 9, **caractérisé en ce que** le au moins un renfoncement (111) ou excroissance formé au niveau de l'extrémité inférieure de l'arceau (1) est formé par une extrémité de la au moins une nervure (11).

11. Chapeau selon l'une quelconque des revendications 1 à 10, **caractérisé en ce que** la base (2) comprend une pièce métallique distincte de l'arceau (1) et ayant la forme générale d'un anneau ouvert dont deux extrémités en vis-à-vis sont munies de passages respectifs (12, 22) pour un axe (3) de serrage dudit anneau, l'extrémité inférieure de l'arceau (1) étant fixée à la base (2) par soudage et/ou par sertissage.

12. Chapeau selon la revendication 11, **caractérisé en ce que** l'extrémité inférieure de l'arceau (1) comporte deux demi-anneaux formant un collier (101) circulaire qui enserre la base (2) sur une fraction de la circonférence de la base (2) comprise entre 20 à 100% et de préférence entre 60 et 100%.

13. Chapeau selon l'une quelconque des revendications 1 à 12, **caractérisé en ce que** la base (2) est composée d'une pièce métallique mise en forme par emboutissage.

14. Bouteille de fluide sous pression munie d'un robinet (18) et d'un chapeau de protection du robinet (18), **caractérisé en ce que** le chapeau est conforme à l'une quelconque des revendications 1 à 13.

15. Procédé de fabrication d'un chapeau de protection pour robinet de bouteille de fluide sous pression conforme à l'une quelconque des revendications 1 à 13, comprenant :
- une étape de réalisation d'un arceau (1) par emboutissage d'une feuille métallique, et
- une étape de soudage de l'extrémité inférieure de l'arceau (1) sur une base (2) de forme générale annulaire, **caractérisé en ce que**, lors de l'étape de réalisation d'un arceau (1) par emboutissage d'une feuille métallique, au moins une nervure (11) est formée dans l'arceau (1), ladite au moins une nervure (11) s'étendant selon la direction de cintrage de l'arceau (1) et étant formée par une pliure d'emboutissage.

## Patentansprüche

1. Schutzkappe für einen Hahn einer unter Druck stehenden Fluidflasche, umfassend einen Bügel (1), der ein abgeschirmtes Schutzvolumen definiert, wobei das untere Ende des Bügels (1) an einer Basis (2) fixiert ist, die eine im Wesentlichen ringförmige Form hat und dazu bestimmt ist, um einen Kragen der unter Druck stehenden Fluidflasche montiert zu werden, wobei der Bügel (1) ein metallisches Blatt umfasst, das durch Pressen in Form gebracht ist, **dadurch gekennzeichnet, dass** der Bügel (1) mindestens eine Rippe (11) umfasst, die über die Gesamtheit oder einen Teil der Längserstreckung des Bügels (1) entlang der Biegungsrichtung des Bügels (1) verläuft, wobei die mindestens eine Rippe (11) durch einen Schweißfalz gebildet ist.

2. Kappe nach Anspruch 1, **dadurch gekennzeichnet, dass** die mindestens eine Rippe (11), die eine Schulter auf dem Bügel (1) bildet, auf dem Bügel (1) entlang der Biegungsrichtung verläuft.

3. Kappe nach einem der Ansprüche 1 oder 2, **dadurch gekennzeichnet, dass** der Bügel (1) zumindest teilweise nach außerhalb des Schutzvolumens konvex ist.

4. Kappe nach einem der Ansprüche 1 und 3, **dadurch gekennzeichnet, dass** das obere Ende des Bügels (1) eine Protuberanz (10) umfasst, auf welcher ein Griffknauf (4) der Kappe befestigt ist.

5. Kappe nach Anspruch 4, **dadurch gekennzeichnet, dass** sie zwei parallele Rippen (11) umfasst, die entlang der Biegungsrichtung des Bügels (1) auf beiden Seiten des Knaufs (4) verlaufen.

6. Kappe nach Anspruch 4 oder 5, **dadurch gekennzeichnet, dass** der Bügel (4) durch Schweißen und/oder durch Bördeln am oberen Ende des Bügels (1) befestigt ist, wobei die Protuberanz (10) durch Pressen des Bügels (1) ausgebildet ist.

7. Kappe nach einem der Ansprüche 4 bis 6, **dadurch gekennzeichnet, dass** der Knauf (4) im Wesentlichen die Form einer Hohlkappe hat, die in der auf dem Bügel (1) montierten Position in ihrem Inneren zumindest einen Teil der Protuberanz (10) aufnimmt.

8. Kappe nach einem der Ansprüche 4 bis 7, **dadurch gekennzeichnet, dass** der Knauf (4) durch Schweißen am freien Ende (100) der Protuberanz (10) befestigt ist.

9. Kappe nach einem der Ansprüche 1 bis 8, **dadurch gekennzeichnet, dass** der Umfang der Basis (2) mindestens eine Ausstülpung (222) zeigt bzw. eine Vertiefung zeigt, die in eine komplementäre Vertiefung (111) aufgenommen wird bzw. eine komplementäre Ausstülpung aufnimmt, die auf dem Niveau des unteren Endes des Bügels (1) ausgebildet ist.

10. Kappe nach Anspruch 9, **dadurch gekennzeichnet, dass** die mindestens eine Vertiefung (111) oder Ausstülpung, die auf dem Niveau des unteren Endes des Bügels (1) ausgebildet ist, durch ein Ende der mindestens einen Rippe (11) ausgebildet ist.

11. Kappe nach einem der Ansprüche 1 bis 10, **dadurch gekennzeichnet, dass** die Basis (2) ein metallisches Stück umfasst, das vom Bügel (1) verschieden ist und im Wesentlichen die Form eines offenen Ringes aufweist, dessen zwei Enden gegenüberliegend mit jeweiligen Durchlässen (12, 22) für eine Spannachse (3) des Rings versehen sind, wobei das untere Ende des Bügels (1) an der Basis (2) durch Schweißen und/oder durch Bördeln befestigt ist.

12. Kappe nach Anspruch 11, **dadurch gekennzeichnet, dass** das untere Ende des Bügels (1) zwei Halbringe umfasst, die einen ringförmigen Rand (101) bilden, der die Basis (2) auf einem Teil des Umfangs der Basis (2) einschließt, der zwischen 20 und 100% und vorzugsweise zwischen 60 und 100% liegt.

13. Kappe nach einem der Ansprüche 1 bis 12, **dadurch gekennzeichnet, dass** die Basis (2) aus einem metallischen Stück gebildet ist, das durch Pressen in Form gebracht ist.

14. Unter Druck stehende Fluidflasche, die mit einem Hahn (18) und einer Schutzkappe des Hahns (18) versehen ist, **dadurch gekennzeichnet, dass** die Kappe einem der Ansprüche 1 bis 13 genügt.

15. Herstellungsverfahen einer Schutzkappe für einen Hahn einer unter Druck stehenden Fluidflasche gemäß einem der Ansprüche 1 bis 13, umfassend:
- einen Schritt, in welchem ein Bügel (1) durch Pressen eines metallischen Blatts verwirklicht wird, und
- einen Schritt, in welchem das untere Ende des Bügels (1) auf einer Basis (2) mit im Wesentlichen ringförmiger Form geschweißt wird, **dadurch gekennzeichnet, dass** während der Verwirklichung eines Bügels (1) mittels Pressens eines metallischen Blatts mindestens eine Rippe (11) im Bügel (1) ausgebildet wird, wobei die mindestens eine Rippe (11), die entlang der Biegungsrichtung des Bügels (1) verläuft, durch einen Schweißfalz gebildet wird.

## Claims

1. Protective cap for pressurised fluid cylinder valve comprising an arch (1) defining a protective sheltered volume, the lower end of the arch (1) being attached to a base (2) of a general annular shape intended to be mounted around the neck of a pressurised fluid cylinder, the arch (1) comprising a metal sheet shaped by pressing, **characterised in that** the arch (1) comprises at least one ridge (11) which extends along the bending direction of the arch (1) over all or part of the length of the arch (1), said at least one ridge (11) being formed by a press fold.

2. Cap as claimed in claim 1, **characterised in that** the at least one ridge (11) forming a shoulder on the arch (1) extending over the arch (1) along the bending direction.

3. Cap as claimed in any one of claims 1 or 2, **characterised in that** the arch (1) is at least partially convex towards the exterior of the protective volume.

4. Cap as claimed in any one of claims 1 and 3, **characterised in that** the upper end of the arch (1) comprises a protrusion (10) on which is attached a knob (4) for gripping the cap.

5. Cap as claimed in claim 4, **characterised in that** it comprises two parallel ridges (11) which extend along the bending direction of the arch (1) on either side of the knob (4).

6. Cap as claimed in claim 4 or 5, **characterised in that** the knob (4) is attached by welding and/or crimping on the upper end of the arch (1), the protrusion (10) being formed by pressing the arch (1).

7. Cap as claimed in any one of claims 4 to 6, **characterised in that** the knob (4) has the general shape of a hollow hood which, in a mounted position on the arch (1), holds within itself at least one part of the protrusion (10).

8. Cap as claimed in any one of claims 4 to 7, **characterised in that** the knob (4) is attached by welding on the free end (100) of the protrusion (10).

9. Cap as claimed in any one of claims 1 to 8, **characterised in that** the circumference of the base (2) has at least one excrescence (222), or respectively an indentation, which is received, respectively which receives, an additional indentation (111) or excrescence formed at the level of the lower end of the arch (1).

10. Cap as claimed in claim 9, **characterised in that** the at least one indentation (111) or excrescence formed at the level of the lower end of the arch (1) is formed by an end of the at least one ridge (11).

11. Cap as claimed in any one of claims 1 to 10, **characterised in that** the base (2) comprises a metal part separate from the arch (1) and having the general shape of an open ring, of which two opposite ends are equipped with respective passages (12, 22) for an axis (3) for clamping said ring, the lower end of the arch (1) being attached to the base (2) by welding and/or by crimping.

12. Cap as claimed in claim 11, **characterised in that** the lower end of the arch (1) comprises two half-rings forming a circular collar (101) which surrounds the base (2) over a fraction of the circumference of the base (2) between 20 to 100% and preferably between 60 and 100%.

13. Cap as claimed in any one of claims 1 to 12, **characterised in that** the base (2) is composed of a metal part shaped by pressing.

14. Pressurised fluid cylinder equipped with a valve (18) and a protective cap for the valve (18), **characterised in that** the cap conforms with any one of claims 1 to 13.

15. Method for producing a protective cap for a pressurised fluid cylinder valve that conforms with any one of claims 1 to 13, comprising:
- a step of producing an arch (1) by pressing a metal sheet, and
- a step of welding the lower end of the arch (1) on a base (2) of general annular shape, **characterised in that**, during the step of producing an arch (1) by pressing a metal sheet, at least one ridge (11) is formed in the arch (1), said at least one ridge (11) extending along the bending direction of the arch (1) and being formed by a press fold.
